# EUROPEAN PATENT APPLICATION

(11) **EP 2 458 438 A2**
(43) Date of publication of application: **30.05.2012**
(21) Application number: 11190601.2
(22) Date of filing: 24.11.2011
(51) Int. Cl.: G03B 21/16

(54) **Image display apparatus**

(30) Priority: 26.11.2010 JP 2010263359
(71) Applicant: Panasonic Corporation, Kadoma-shi Osaka 571-8501 (JP)
(72) Inventor: Enomoto, Hirofumi, Osaka, 540-6207 (JP); Teshima, Yoshihiro, Osaka, 540-6207 (JP); Suyama, Kohei, Osaka, 540-6207 (JP)
(74) Representative: Eisenführ, Speiser & Partner

(57) **Abstract**

An image display apparatus of the present invention includes an air passage formed by connecting an air inlet port and an exhaust port inside a case having the air inlet port and the exhaust port, and an air blower that is arranged in the air passage. At least a part of a heat dissipator of a red color laser light source apparatus having the lowest upper limit of an operating temperature is arranged in the air passage closer to the air inlet port than heat dissipators of other laser light sources and also directly below the cooling fan. Hence, it is possible to provide the image display apparatus that inhibits image quality deterioration.

## Description

### BACKGROUND OF THE INVENTION

### 1. Field of the Invention

The present invention relates to an image display apparatus in which a laser light source apparatus using a semiconductor laser is incorporated.

### 2. Description of Related Art

In recent years, laser light has drawn attention as a light source of an image display apparatus which can perform large-screen display, and technology development of a semiconductor laser has been promoted to form this laser light. Compared with an ultra-high pressure mercury lamp (UHP lamp) conventionally used as a light source of an image display apparatus or a light-emitting diode (LED) recently used in a small-sized image display apparatus, a light source using a semiconductor laser light source has advantages including good color reproducibility, instant light up, long life, and high efficiency in electrical/optical conversion.

Hereinafter, a conventional laser light source apparatus will be explained. As described in Japanese Patent Application Publication No. 2010-32796, for example, the conventional light source apparatus has a red color laser light source, a blue color laser light source, and a green color laser light source as short-wavelength laser light sources which consecutively emit red color (R) laser light, blue color (B) laser light, and green color (G) laser light, respectively. The red color laser light source and the blue color laser light source are semiconductor lasers that emit red color laser light and blue color laser light, respectively. The green color laser light source has a structure in which wavelength conversion is performed to laser light of the semiconductor laser so as to emit green color laser light.

The above-described conventional image display apparatus uses three color laser light as light sources, and projects images having good color reproducibility. In the conventional image display apparatus, however, quality of projected images deteriorates when the conventional image display apparatus is used for a long period. The three laser light sources each have different temperature characteristics. Basically, an increase in temperature of a laser light source causes a decrease in its output. An output of a red color laser light source apparatus particularly decreases in association with a temperature increase. Thus, the output of the red color laser light source apparatus is likely to become weak as the temperature increases when the conventional image display apparatus is used for a long period. As one color of three color laser light becomes weak in this way, the conventional image display apparatus cannot output images of high quality.

### SUMMARY OF THE INVENTION

An advantage of the present invention is to provide an image display apparatus that inhibits image quality deterioration.

The image display apparatus according to the present invention includes a plurality of light sources each emitting light different from one another and each having an upper limit of operating temperature. The image display apparatus also includes cooling means providing a passage in which cooling medium flows from an upper stream to a lower stream, the cooling medium at the upper stream of the passage being cooler than that at the lower stream of the passage. Each of the plurality of light sources has a heat dissipator that releases heat generated by the respective of light source to the passage of the cooling means. At least a part of the heat dissipator of the light source having the lowest upper limit of operating temperature among the plurality of light sources is positioned, at the passage, upstream to any heat dissipator of any other light sources.

With the configuration, the heat dissipator of the light source which has the lowest upper limit of the operating temperature is positioned, at the passage, upstream to the heat dissipator of other light sources. Thus, the heat dissipator of the light source that has the lowest upper limit of operating temperature can be first and directly cooled with outside air taken in through the air inlet port. In other words, the heat dissipator of the light source having the poorest temperature characteristics is preferentially cooled. Accordingly, the heat dissipation of the light source that has the lowest upper limit of operating temperature is particularly facilitated. In other words, a temperature increase of the light source that has the lowest upper limit of operating temperature is particularly inhibited. Accordingly, a decrease in an output of the light source that has the lowest upper limit of operating temperature is inhibited even when the image display apparatus is used for a long period. Thus, it is possible to stably obtain a light output.

Another aspect of the present invention is to efficiently utilize outside air without any loss for heat dissipation by arranging an air inlet port and an air blower inside a case integrated with an image display apparatus main body.

Another aspect of the present invention is to successfully perform heat dissipation of a heat dissipator of a light source by arranging the heat dissipator of the light source close to an air inlet port and an air blower and by shortening an air passage. Thus, it is possible to shorten the air passage, to make an arrangement of the apparatus smaller, and to make the image display apparatus thinner.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 is a schematic perspective view of an image display apparatus main body according to embodiment 1 of the present invention;
Fig. 2 is a schematic perspective view of a tilted state of the image display apparatus according to the embodiment 1 of the present invention;
Fig. 3 is a schematic perspective view illustrating an internal configuration of the image display apparatus according to the embodiment 1 of the present invention;
Fig. 4 is a schematic assembly view illustrating an internal assembly of the image display apparatus according to the embodiment 1 of the present invention;
Fig. 5 is a schematic cross sectional view illustrating a heat passage and a cooling air passage inside the image display apparatus according to the embedment 1 of the present invention;
Fig. 6 illustrates a relationship (temperature characteristics) between operating temperature and light outputs of the laser light source apparatuses of respective colors according to the embodiment 1 of the present invention;
Fig. 7 illustrates an example where the image display apparatus according to the embodiment 1 of the present invention is incorporated in an electronic device;
Fig. 8 is an exploded view of an image display apparatus according to embodiment 2 of the present invention;
Fig. 9 is a top view of the image display apparatus according to the embodiment 2 of the present invention;
Fig. 10 is a cross sectional view illustrating a heat passage and a cooling air passage of the image display apparatus according to the embedment 2 of the present invention;
Fig. 11 illustrates a positional relationship between vent holes of a cooling fin and air inlet ports on an outer case according to the embodiment 2 of the present invention;
Fig. 12 is a cross sectional view illustrating the cooling fin and the air inlet ports according to the embodiment 2 of the present invention; and
Fig. 13 illustrates a perspective view of the cooling fin and an enlarged view of the vent holes according to the embodiment 2 of the present invention.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

### Embodiment 1

Hereinafter, embodiment 1 of the present invention will be explained with reference to the drawings.

In this embodiment, explanations will be made on a case where the image display apparatus is configured with laser light sources of typical three colors, that is, a red color laser light source, a green color laser light source, and a blue color laser light source.

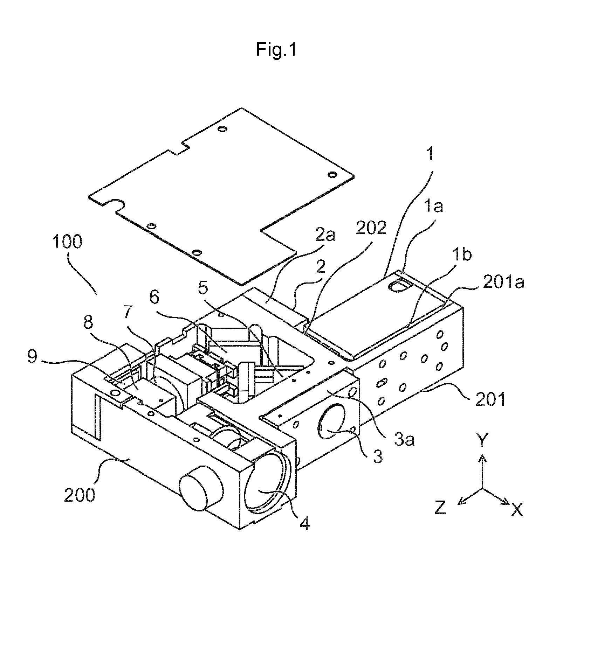

First, the configuration of an image display apparatus main body will be explained with reference to Fig. 1. Fig. 1 is a schematic perspective view of the image display apparatus main body according to the embodiment 1 of the present invention.

In Fig. 1, the image display apparatus main body 100 uses laser light as a light source and performs magnification and projection on the screen (not shown in the drawing). The image display apparatus main body 100 has three light sources, that is, a green color laser light source apparatus 1 (first laser light source), a red color laser light source apparatus 2 (second laser light source), and a blue color laser light source apparatus 3 (third laser light source). The image display apparatus main body 100 displays an image with the three-color laser light source apparatuses 1 to 3.

The green color laser light source apparatus 1 mainly outputs green color laser light by converting non-visible infrared fundamental laser light to a half wavelength. A green color laser holder 1a is a case for the green color laser light source apparatus 1, and fixes each element (for example, a semiconductor laser (first laser element) that outputs infrared fundamental laser light, and the like) that is accommodated in the green color laser holder 1a.

The red color laser light source apparatus 2 outputs red color laser light, and a red color laser holder 2a is a case for the red color laser light source apparatus 2. The red color laser holder 2a retains a semiconductor laser (second laser element) that outputs red color laser light.

The blue color laser light source apparatus 3 outputs blue color laser light, and a blue color laser holder 3a is a case for the blue color laser light source apparatus 3. The blue color laser holder 3a retains a semiconductor laser (third laser element) that outputs blue color laser light. Here, the position arrangement of the green color laser light source apparatus 1, the red color laser light source apparatus 2, and the blue color laser light source apparatus 3 will be described in detail. The blue color laser light source apparatus 3 is provided in a plane of a main body case 200 where a projecting lens 4 is retained, and laser light from the blue color laser light source apparatus 3 is guided inside the main body case 200.

The green color laser light source apparatus 1 and the red color laser light source apparatus 2 are provided in a plane perpendicular to the plane, where the projecting lens 4 and the blue color laser light source apparatus 3 are provided, on a side of the blue color laser light source apparatus 3. The main body case 200 has a protrusion 201 so as to extend the plane where the projecting lens 4 and the blue color laser light source apparatus 3 are provided in a direction where the green color laser light source apparatus 1 is provided. In other words, the protrusion 201 is provided integrally with the main body case 200 on a corner of the main body case 200. Although the protrusion 201 may be provided as a separate member from the main body case 200, it is preferable that the protrusion 201 is provided integrally with the main body case 200 because heat dissipation can be facilitated.

A fixing plane 1 b of the green color laser holder 1 a is arranged to contact a plane 201 a of the protrusion 201. Elements such as an SHG (second harmonic generation) element, a semiconductor laser, and the like, inside the green color laser light source apparatus 1 are fixed to the fixing plane 1 b of the green color laser holder 1a. The plane 201a is a plane that contacts the fixing plane 1b in the protrusion 201.

The green color laser light source apparatus 1 does not contact a plane 202 of the main body case 200 so as not to directly transfer heat to the plane 202 of the main body case 200, and a predetermined gap (0.5 mm or less in this embodiment) is provided. Further, since the red color laser light source apparatus 2 requires about 0.3 mm as an optical axis adjustment range, the distance between the green color laser light source apparatus 1 and the red color laser light source apparatus 2 is 0.3 mm or more.

The reason why the predetermined gap is set to be 0.5 mm or less in this embodiment is as follows. When the predetermined gap increases, the entire image display apparatus becomes large, or the distance between the green color laser light source apparatus 1 and a collimator lens (not shown in the drawing) increases, which causes the use efficiency of light to be deteriorated by diffusion of green color laser light before reaching the collimator lens. With this, as described below, it is possible to make it difficult for heat from the green color laser light source apparatus 1 to be transferred to the red color laser light source apparatus 2. Consequently, the red color laser light source apparatus 2 having poor temperature characteristics can be used stably.

A dichroic mirror 5 as a light path guide and a dichroic mirror 6 as a light path guide are configured by forming a film that transfers or reflects laser light of a predetermined wavelength on the surface thereof. A field lens 7 converts the diffused laser light into a converging laser. A PBS 8 (Polarized Beam Splitter) reflects laser light of the respective colors, and directs it to a spatial modulation element 9. The spatial modulation element 9 adjusts deflection of the laser light of the respective colors to form images. The spatial modulation element 9 used in this embodiment is reflective liquid crystal. A large-screen image is projected after passing through the projecting lens 4. The laser light of the respective colors from the laser light source apparatuses 1 to 3 of the respective colors is collimated by each collimator lens. The collimated laser light of the respective colors is directed toward a diffusing plate by the dichroic mirrors 5 and 6; travels through the diffusing plate, the field lens 7, and the PBS 8 in this order; is reflected on the spatial modulation element 9; and is magnified and projected on a screen by the projecting lens 4.

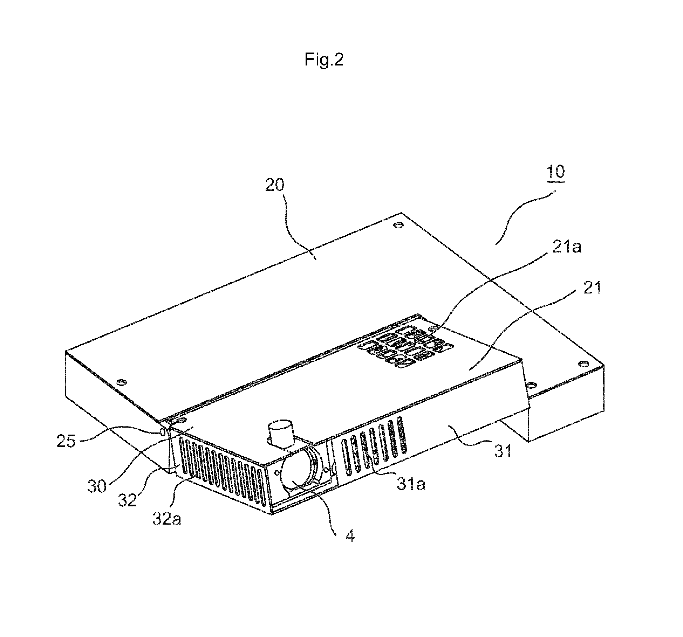

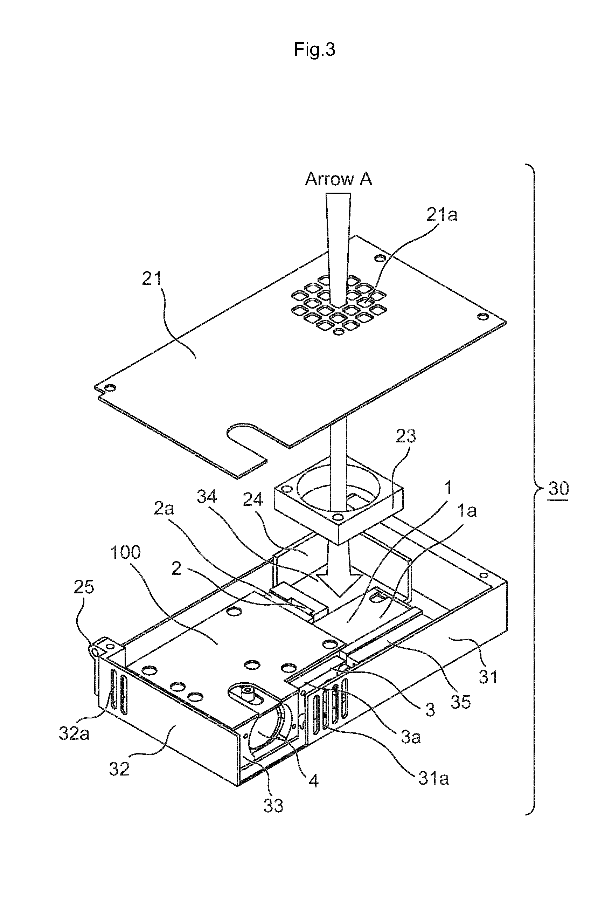

Fig. 2 is a schematic perspective view of a tilted state of the image display apparatus according to the embodiment 1 of the present invention. As shown in Fig. 2, an image display apparatus 10 includes a fixed portion 20 and a tilted portion 30. The tilted portion 30 is provided to be rotatable with respect to the fixed portion 20 by pivoting on a hinge portion (rotation axis) 25. In other words, the tilted portion 30 can rotate around an axis perpendicular to a direction in which the image display apparatus main body 100 (see Figs. 1 and 3) projects an image and a direction A (see Fig. 3) in which a cooling fan 23 (see Fig. 3), which is an air blower, takes in cooling air. Accordingly, a projection angle of the projecting lens 4 is adjustable. The tilted portion 30 houses the cooling fan 23, the image display apparatus main body 100, and the like, and pivots in a vertical direction on the hinge portion (rotation axis) 25. Thus, an image projected by the projecting lens 4 can be inhibited from reflecting on a placement surface of the image display apparatus 10.

Next, a schematic internal configuration of the image display apparatus 10 will be explained with reference to Figs. 3 to 5. The cooling fan 23 shown in Figs. 3 to 5 includes an air-blowing fan, which is not shown in the drawings, in a tubular portion.

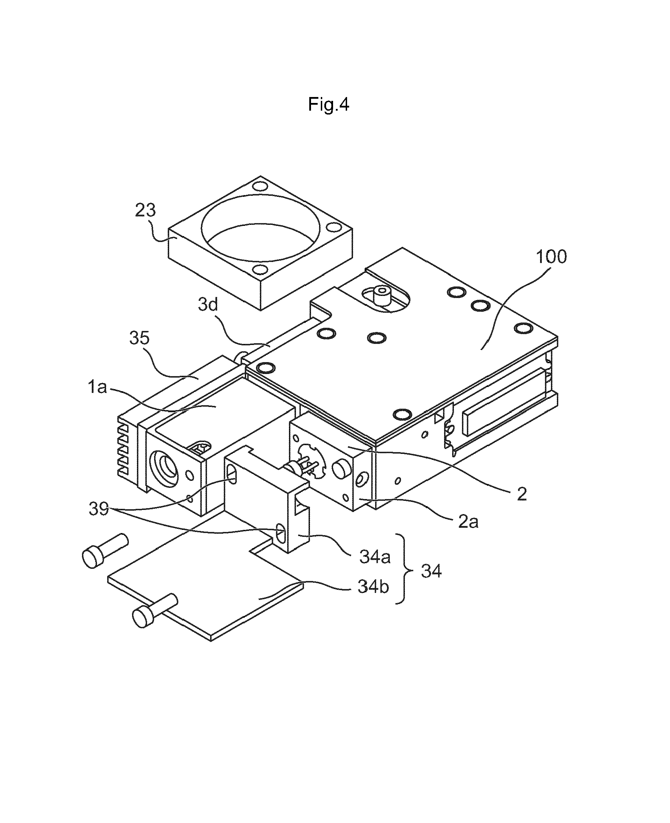

Fig. 3 is a schematic perspective view illustrating the internal configuration of the image display apparatus according to the embodiment 1 of the present invention. As shown in Fig. 3, the tilted portion 30 houses the image display apparatus main body 100, which has been explained with Fig. 1, the cooling fan 23, a fin, and the like. The cooling fan 23 is arranged directly below air inlet ports 21 a (in a direction perpendicular to the air inlet ports 21 a). The cooling fan 23 is attached to a surface where the air inlet ports 21 a are provided so as to have a distance from a bottom portion 34b (see Fig. 4) of a fin 34 of the red color laser light source apparatus 2, which is located directly below the cooling fan 23. In other words, the cooling fan 23 is serially provided between the air inlet ports 21 a and the bottom portion 34b of the fin 34.

The air inlet ports 21a are provided on an upper surface 21 of the tilted portion 30. Exhaust ports 31 a are provided on a side surface 31 of the tilted portion 30. Exhaust ports 32a are provided on a side surface 32 of the tilted portion 30. The air inlet ports 21 a and the exhaust ports 31 a are configured with a plurality of vent holes. The cooling fan 23 rotates when an electric source is supplied. The cooling fan 23 takes in cooling air outside of the image display apparatus 10 from the air inlet ports 21 a side, and releases the cooling air in a direction of arrow A. The cooling air flows from a space between the cooling fan 23 and the bottom portion 34b (see Fig. 4) of the fin 34 toward a fin 35 of the green color laser light source apparatus 1. The cooling air further flows to the exhaust ports 31 a via the blue color laser holder 3a of the blue color laser light source apparatus 3, and is discharged through the exhaust ports 31 a. In addition, the cooling air flows through another air passage. The cooling air flows from a space between the cooling fan 23 and the bottom portion 34b (see Fig. 4) of the fin 34 to the exhaust ports 32a, and is discharged through the exhaust ports 32a. In other words, the cooling fan 23 housed in the tilted portion 30 takes in and releases the cooling air in order to effectively dissipate heat generated from the red color laser light source apparatus 2, which is located on an upper stream of the cooling air passage relative to the laser light sources of other two colors, and to promote heat dissipation inside the image display apparatus 10.

The air inlet port 21 a, the exhaust port 31 a, and the exhaust port 32a are each configured with a plurality of vent holes in the embodiment 1, however, they may be configured with a single vent hole. The shape of the air inlet port 21 a, the exhaust port 31 a, and the exhaust port 32a may be circular, oval, or polygonal, and it is not limited to a particular shape.

In the embodiment 1, an entire surface of the bottom portion 34b of the fin 34 is positioned in the air passage of the cooling fan 23 so as to receive a maximum amount of air. However, the arrangement of the bottom portion 34b is not limited to the above, and may be determined considering a relationship between a heat dissipation effect and a space. Alternatively, in other words, at least a part of the bottom portion 34a of the fin 34 may be positioned in the air passage of the cooling fan 23.

The air inlet ports 21a are provided on the upper surface of the tilted portion 30 in the embodiment 1. Alternatively, an air inlet port may be provided on a lower surface of the tilted portion 30 so as to form a cooling air passage similar to that of the embodiment 1 with altered arrangement of the cooling fan and a shape of the fin. In other words, the arrangement may be vertically reversed with respect to the embodiment 1.

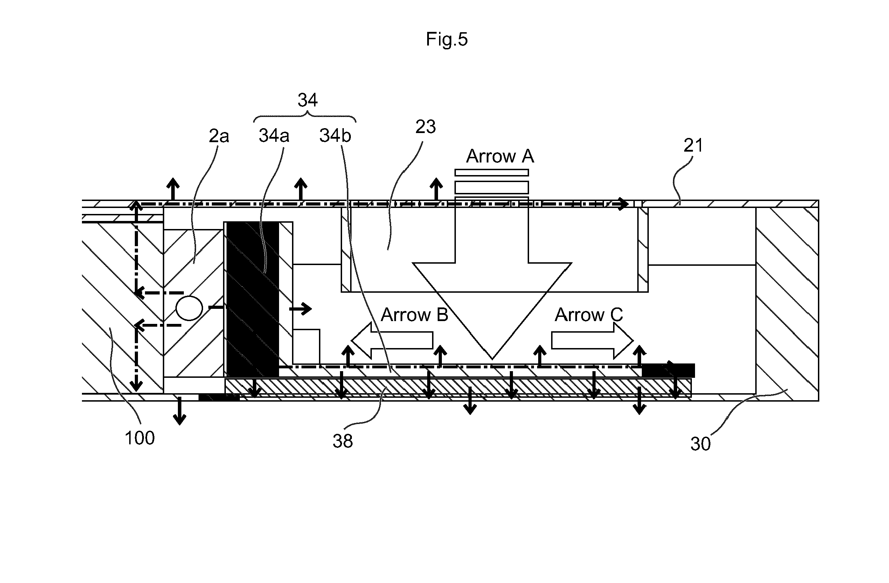

Fig. 4 is a schematic assembly view illustrating an internal assembly of the image display apparatus according to the embodiment 1 of the present invention. As shown in Fig. 4, the red color laser holder 2a of the red color laser light source apparatus 2 is provided to the image display apparatus main body 100. The red color laser holder 2a can adjust an optical axis of laser light. The fin main body 34 is attached to the red color laser holder 2a so as to dissipate heat generated from the red color laser light source apparatus 2. Elongated holes 39 are mutually diagonally provided to a fitting portion 34a, which is a portion of the fin main body 34. First, the optical axis of the laser light is adjusted with the red color laser holder 2a. Thereafter, the red color laser holder 2a is fixed to the main body case 200 (see Fig. 1). Next, the fin main body 34 is fixed to the red color laser holder 2a while a heat conductive sheet 38 (see Fig. 5) is tightly pressed against the case of the tilted portion 30 by use of the elongated holes 39 of the fitting portion 34a. By doing so, heat dissipation and heat transfer can be sufficiently performed in each component. The heat conductive sheet 38 (see Fig. 5) is provided under the fin bottom portion 34b, however, it may be extended and widely provided to reach under the image display apparatus main body 100.

As described later, generally, the red color laser light source apparatus 2 has the poorest temperature characteristics among the laser light source apparatuses 1 to 3 of the respective colors (see Fig. 1). Accordingly, in order to maintain the characteristics of the red color laser light source apparatus 2, heat dissipation of the red color laser light source apparatus 2 is indispensable and needs to be given top priority over the laser light source apparatus of other two colors. The fin 34 is composed of a member having high thermal conductivity. The fin 34 serves as a heat dissipator of the red color laser light source apparatus 2, and aids heat dissipation of the red color laser light source apparatus 2. The fin 34 is connected to the red color laser holder 2a of the red color laser light source apparatus 2. Thus, heat generated from the red color laser light source apparatus 2 is transferred to the fin 34. The fin 34 is cooled by the cooling air released from the cooling fan 23. Accordingly, it is possible to promote the heat dissipation of the red color laser light source apparatus 2.

Further, the fin 34 is configured to increase the heat dissipation area (surface area), which makes it possible to receive the cooling air from the cooling fan 23 with a larger area. Accordingly, the heat dissipation property of the red color laser light source apparatus 2 is improved. In other words, in order to attempt thinning of the image display apparatus and to increase a heat capacity, heat dissipation area, and an air receiving area as much as possible, the fin main body 34 is L-shaped, and is configured with the fitting portion 34a for fitting to the red color laser holder 2a and the fin bottom portion 34b. The fitting portion 34a is tightly attached to the red color laser holder 2a, and also dissipates heat generated from the red color laser light source apparatus 2 attached to the red color laser holder 2a. The fin bottom portion 34b mainly receives the cooling air directly from the cooling fan 23, and dissipates heat of the red color laser light source apparatus 2. The fin bottom portion 34b contacts a bottom of the case of the tilted portion 30 shown in Fig. 3 via the heat conductive sheet 38 (see Fig. 5). Thus, the heat generated in the red color laser light source apparatus 2 attached to the red color laser holder 2a shown in Fig. 4 is dissipated outside not only with the cooling air sent in by the cooling fan 23 but also via the bottom of the case of the tilted portion 30. Thereby, heat dissipation property of the red color laser light source apparatus 2 is further improved.

Although not shown in Fig. 4, as shown in Fig. 3, side walls 24 are provided at edges of the fin bottom portion 34b so as to oppose the side surfaces of the cooling fan 23 except a side surface facing the image display apparatus main body 100. The side walls 24 are composed of material having a thermal conductivity (for example, aluminum). A part of the side walls 24 is closely attached to the fin bottom portion 34b. The heat generated from the red color laser light source apparatus attached to the red color laser holder 2a shown in Fig. 4 is transferred to the side walls 24 of the fin 34 shown in Fig. 3 via the fitting portion 34a and the bottom portion 34b of the fine 34. Then, the heat is dissipated by the cooling air released from the cooling fan 23. The side walls 24 also prevent the cooling air, which is taken in from the outside by the cooling fan 23, from leaking in an undesirable direction. Thereby, the cooling air taken in by the cooling fan 23 more easily flows toward the red color laser holder 2a provided to the image display apparatus main body 100. In other words, it is expected that heat dissipation from the red color laser light source apparatus 2 shown in Fig. 4 be further promoted.

The red color laser holder 2a, the fin 34, and the side walls 24 are separate members in the embodiment 1. Alternatively, the red color laser holder 2a, the fin 34, and the side walls 24 may be integrated in order to improve thermal conductivity. By integrating them, the red color laser light source apparatus 2 can perform heat dissipation with more ease. As described above, the outside air is directly introduced to the fin 34, which is the heat dissipator of the red color laser light source apparatus 2, thereby making it possible to effectively perform heat dissipation.

A detailed explanation will be made on a flow of heat dissipation of the red color laser light source apparatus in the image display apparatus 10 with reference to Fig. 5. Fig. 5 is a schematic cross sectional view illustrating a heat passage and a cooling air passage inside the image display apparatus according to the embedment 1 of the present invention.

First, the heat passage inside the image display apparatus will be explained with reference to Fig. 5.

Heat generated from a heat generator (semiconductor laser and the like that outputs red color laser light) of the red color laser light source apparatus 2 (see Fig. 1) is first transferred to the red color laser holder 2a. The heat transferred to the red color laser holder 2a is transferred to the fin 34. A part of the heat transferred to the fin 34 is transferred from the case of the tilted portion 30 to the outside via the heat conductive sheet 38 closely attached to the fin bottom portion 34b.

The heat dissipation of the red color laser light source apparatus 2 is also performed through the main body case 200 (see Fig. 1). Since the red color laser holder 2a is in contact with the main body case 200, the heat generated from the red color laser light source apparatus 2 is transferred to the main body case 200. The heat is then transferred to the outside via the image display apparatus main body 100. In the Fig. 5, a dashed-dotted line indicates the main heat passage from the heat generator of the red color laser light source apparatus 2.

Next, the cooling air passage inside the image display apparatus will be explained with reference to Fig. 5. The cooling fan 23 attached to the tilted portion 30 takes in outside air through the air inlet ports 21 a (see Fig. 3) and releases it in a direction of an arrow A as cooling air. The cooling air from the cooling fan 23 is straightly blown onto the bottom portion 34b of the fin 34 connected to the red color laser holder 2a. Then, the cooling air that has blown onto the bottom portion 34b of the fin 34 flows out in directions of arrows B and C along the surface of the bottom portion 34b of the fin 34. The arrows B and C are herein described as representatives, however, the cooling air flows out in all the directions around the arrow A as a center.

The fin 34 is provided in the cooling air passage indicated as the arrow A. Thus, the heat transferred to the fin 34 is absorbed by the cooling air taken in by the cooling fan 23 through the air inlet ports 21 a. The fin 34 is cooled as describe above, thereby being able to further receive the heat generated from the red color laser light source apparatus 2 (see Fig. 1).

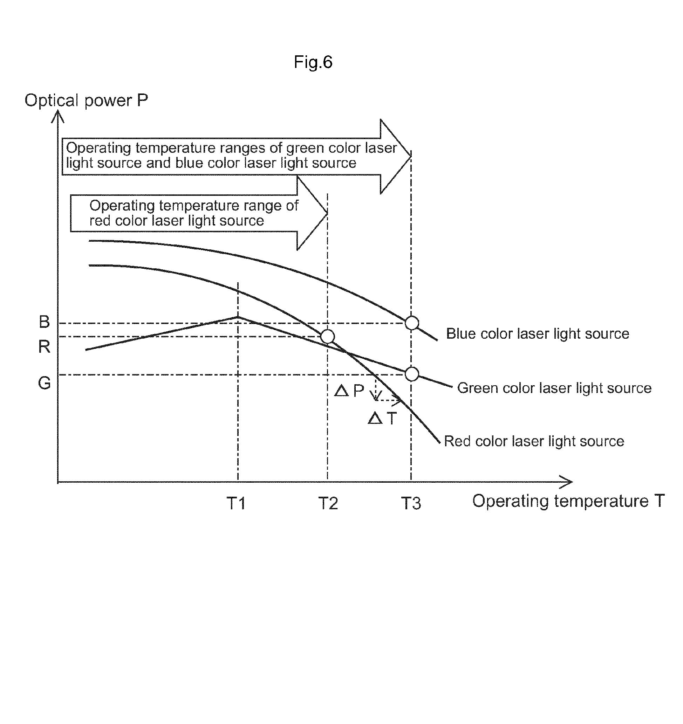

Herein, a detailed explanation will be made on the reason for giving top priority to heat dissipation of the red color laser light source apparatus 2 (see Fig. 1). Fig. 6 illustrates a relationship (temperature characteristics) between operating temperature and light outputs of the laser light source apparatuses of the respective colors according to the embodiment 1 of the present invention. The operating temperature is divided into four ranges in Fig. 6. Explanations will be made on each of the temperature ranges.

First, an explanation will be made on a case where the operating temperature range is T ≤ T1. In the relationship between the operating temperature and the light outputs of the laser light source apparatuses of the respective colors shown in Fig. 6, T1 indicates an inflection-point temperature of a light output of the green color laser light source apparatus 1. In this temperature range, the light output of the green color laser light source apparatus 1 increases as the operating temperature increases. On the other hand, light outputs of both the red color laser light source apparatus 2 and the blue color laser light source apparatus 3 gradually and similarly decrease as the operating temperature increases. However, the light outputs do not decrease as low as to impair the characteristics, such as color reproducibility, of the image display apparatus. Thus, the image display apparatus can be used with no problem.

Next, an explanation will be made on a case where the operating temperature range is T1 < T ≤ T2. As shown in Fig. 6, T2 is an upper limit of an operating temperature at or below which the light output of the red color laser light source apparatus 2 can display the characteristics of the red color laser light source apparatus 2. In this temperature range, the light outputs of all the laser light source apparatuses of the three respective colors decrease as the operating temperature increases. In particular, light output decreasing rates (corresponding to amounts of decrease in the light outputs of the laser light source apparatuses with respect to a unit temperature change indicated by ΔP / ΔT in Fig. 6) of the red color laser light source apparatus 2 and the blue color laser light source apparatus 3 become greater as the operating temperature increases. In addition, the light output decreasing rate of the red color laser light source apparatus 2 is remarkably greater than those of the laser light sources of other two colors. Accordingly, in this temperature range, as the operating temperature of the red color laser light source apparatus 2 increases, the light output thereof continuously decreases with a greater amount of decrease. In the end, the operating temperature reaches the upper limit of the operating temperature T2 at or below which the characteristics of the red color laser light source apparatus 2 are displayed. The light output of the red color laser light source apparatus 2 decreases to reach a light output required value R at the operating temperature T2, which is lower than light output required values B and G of the laser light source apparatuses of the respective other two colors. When the operating temperature exceeds T2, the red color laser light source apparatus 2 cannot obtain a light output required as an image display apparatus.

Next, an explanation will be made on a case where the operating temperature range is T2 < T ≤ T3. As shown in Fig. 6, T3 is an upper limit of an operating temperature at or below which the green color laser light source apparatus 1 and the blue color laser light source apparatus 3 can obtain light outputs equal to or more than the light output required values B and G, respectively. As described above, the light output of the red color laser light source apparatus 2 cannot maintain the light output required value R in this temperature range. As the operating temperature increases, the light outputs of the green color laser light source apparatus 1 and the blue color laser light source apparatus 3 decrease with a greater amounts of decrease. In the end, the operating temperature reaches the upper limit of the operating temperature T3 at or below which the light output required value G of the green color laser light source apparatus 1 and the light output required value B of the blue color laser light source apparatus 3 can be maintained. Above the temperature T3, the light outputs of the green color laser light source apparatus 1 and the blue color laser light source apparatus 3 further decrease and cannot maintain the light output required values B and G. Thus, light outputs required as an image display apparatus cannot be obtained.

In the embodiment 1, as shown in Fig. 6, the upper limit of the operating temperature at or below which the green color laser light source apparatus 1 can maintain the light output greater than or equal to the light output required value G, and the upper limit of the operating temperature at or below which the blue color laser light source apparatus 3 can maintain the light output greater than or equal to the light output required value B are both the temperature T3. Even when the two upper limits of the operating temperatures are different, however, the same phenomenon as described above is simply repeated while temperature range T2 < T ≤ T3 being further divided. Thus, fundamentally there is no difference.

Lastly, an explanation will be made on a case where the operating temperature range is T > T3. In this temperature range, none of the laser light source apparatuses can maintain light outputs greater than or equal to the respective light output required values. Thus, light outputs required as an image display apparatus cannot be obtained.

As described above, the upper limit of the operating temperature of the red color laser light source apparatus 2 is lower than those of the other laser light source apparatuses. Thus, it is necessary to more preferentially inhibit a temperature increase of the red color laser light source apparatus 2 than other laser light source apparatuses. Accordingly, in the embodiment 1, as shown in Fig. 5, the fin 34, which serves as the heat dissipator of the red color laser light source apparatus 2 (see Fig. 1) housed in the red color laser holder 2a, is provided directly below the cooling fan 23 of the tilted portion 30. The fin bottom portion 34b, which is a portion of the fin 34 serving as the heat dissipator of the red color laser light source apparatus 2, is positioned directly below the air inlet ports 21a and the cooling fan 23. Cooling air introduced into the tilted portion 30 straightly cools the bottom portion 34b of the fin 34, which is the heat dissipator of the red color laser light source apparatus 2 connected to the red color laser holder 2a, with a short distance. In other words, the cooling air cools the fin 34 as the heat dissipator of the red color laser light source apparatus 2 before absorbing heat of other members inside the tilted portion 30. By forming a cooling air passage in this way, the heat dissipator (fin 34) of the red color laser light source apparatus 2 is preferentially cooled, thereby inhibiting a decrease in the output of the red color laser light source apparatus 2 (see Fig. 1), which has the poorest temperature characteristics. Consequently, the image display apparatus main body 100 (see Fig. 1) can stably output images of high quality.

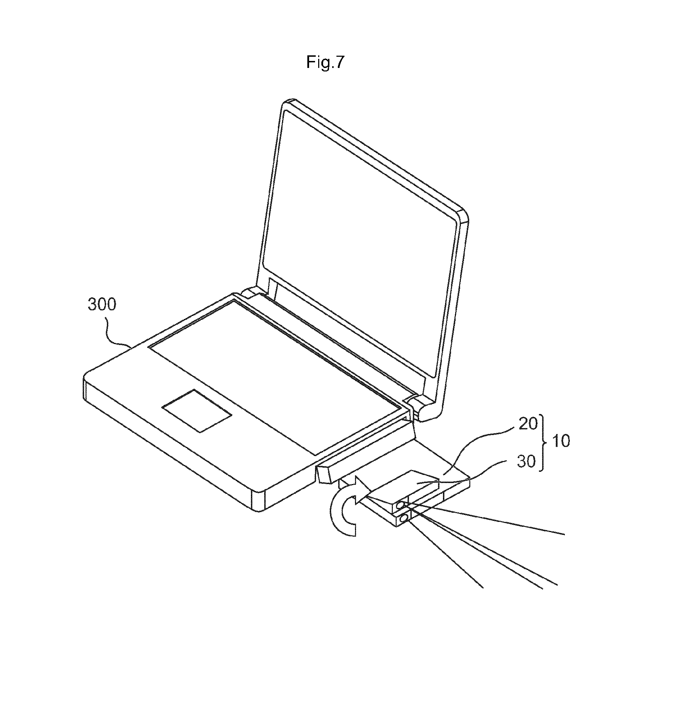

Fig. 7 illustrates an example where the image display apparatus according to the embodiment 1 of the present invention is incorporated in an electronic device. The image display apparatus 10 of the embodiment 1 may be used as a single body. Alternatively, the image display apparatus 10 may be incorporated in a PC 300 that is an electronic device such as a personal computer (PC, hereinafter) and the like, as shown in Fig. 7. The image display apparatus 10 can be ejected or inserted with respect to the PC 300 as needed, and can project displayed output of the PC 300 to a screen, a wall, and the like. Consequently, it is possible to easily project displayed output of the PC 300 to a large screen without connecting a separate image display apparatus to the PC 300 via a wire and the like.

As shown in Figs. 2 and 3, the cooling fan 23 and the image display apparatus main body 100 are each provided inside the rotatable movable body (tilted portion 30). In other words, the image display apparatus main body and the cooling fun, which is required to cool the image display apparatus main body, are accommodated in the tilted portion 30 shown in Fig. 7. Even when the image display apparatus is incorporated in an electronic device, such as a PC, and is used while rotating, the rotation body, that is, the tilted portion 30, can take in outside air at any rotated position in a state protruding from the PC 300. Accordingly, a decrease in an output of the red color laser light source apparatus is inhibited even when the image display apparatus is used for a long period. Thus, outputs of three color laser light can be stably obtained. Further, the air inlet ports and the air blower are accommodated in the case that is integrated with the image display apparatus main body. Thus, outside air can be efficiently used for heat dissipation without any loss. In addition, since the cooling air passage can be shortened, heat dissipation at the heat dissipators of the respective laser light sources can be successfully performed. In the above configuration, only the minimally required portion of the tilted portion 30 may protrude outward, which gives an advantage that a space required for an operation can be smaller.

The position to attach the image display apparatus 10 to the PC 300 is not limited to a right surface of the PC 300 as shown in Fig. 7. The image display apparatus 10 may be attached on a left surface, a rear surface, a front surface, or the like of the PC 300.

When the image display apparatus 10 is incorporated into the PC 300 (electronic device), the tilted portion 30 is arranged to protrude outside the PC 300 so as to freely rotate. Thus, at least a part of the fixed portion 20 needs to be fixed to the PC 300.

Examples of the electronic device other than the PC 300 include a television, a display, an optical disc player, a portable optical disc player, and the like. Anything to project an image may be included. Alternatively, in order to project information of an electrical device (for example, home electrical appliance such as a refrigerator or a washing machine) to the outside, the image display apparatus 10 may be incorporated into such an electrical device.

As described above, in the image display apparatus of the embodiment 1, at least a part of the heat dissipator of the red color laser light source, which has the lowest upper limit of the operating temperature, is positioned directly below the air blower in the cooling air passage. Since outside air can be efficiently used for heat dissipation, a temperature increase of the red color laser light source is inhibited, thereby reducing fluctuation in temperature characteristics. Thus, it is possible to inhibit image quality deterioration of the image display apparatus due to a long period of use. In other words, the image display apparatus can inhibit the quality deterioration of projected images, and thus can stably output images of high quality.

In the embodiment 1, explanations are made on a case where the image display apparatus is configured with laser light sources of typical three colors, that is, a red color laser light source, a green color laser light source, and a blue color laser light source. Even in a case where laser light sources having other emission wavelengths are further added in order to improve quality of images of the image display apparatus, the same effect can be obtained by forming a configuration similar to that of the embodiment 1.

### Embodiment 2

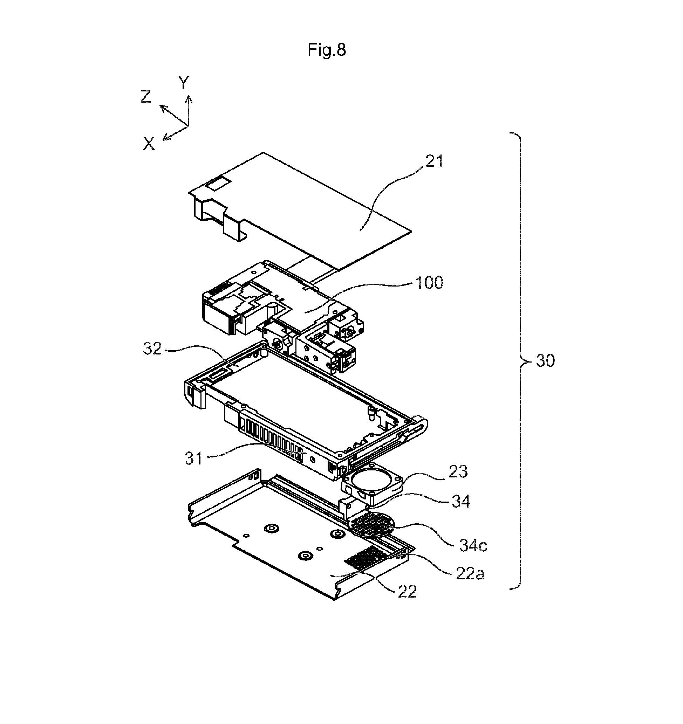

Embodiment 2 of the present invention will be hereinafter described with reference to Figs. 8 to 12. Component members having the same configuration and function as the embodiment 1 will be given the same numerical references and the detailed illustration thereof will be omitted.

The arranged location and shape of the fin 34, and the location of air inlet ports in the embodiment 2 are different from the embodiment 1. The differences are described hereafter in detail.

Fig. 8 is an exploded view of an image display apparatus according to the embodiment 2 of the present invention. As shown in Fig. 8, the tilted portion 30 houses the image display apparatus main body 100 that has been described with reference to Fig. 1, the cooling fan 23, the fin 34, and the like. A bottom portion 34c of the fin 34 is arranged directly above air inlet ports 22a (in a vertical direction of the air inlet ports 22a). The cooling fan 23 is arranged directly above the bottom portion 34c of the fin 34. In the present embodiment, unlike the embodiment 1, a surface to take in outside air is provided on a lower surface 22 of the tilted portion 30. The plurality of air inlet ports 22a is provided on the lower surface 22 of the tilted portion 30. A plurality of vent holes, which will be described later, is provided to the bottom portion 34c of the fin 34.

The bottom portion 34c of the fin 34 is also provided directly above the air inlet ports 22a of the lower surface 22 of the tilted portion 30 so as to have a distance in-between. Further, the bottom portion 34c of the fin 34 is also provided directly below the cooling fan 23 so as to have a distance in-between. The cooling fan 23 is provided so as to have a distance with respect to the upper surface 21 of the tilted portion 30.

In other words, the air inlet ports 22a, the bottom portion 34c of the fin 34, the cooling fan 23, and the upper surface 21 are serially provided while having distances from one another.

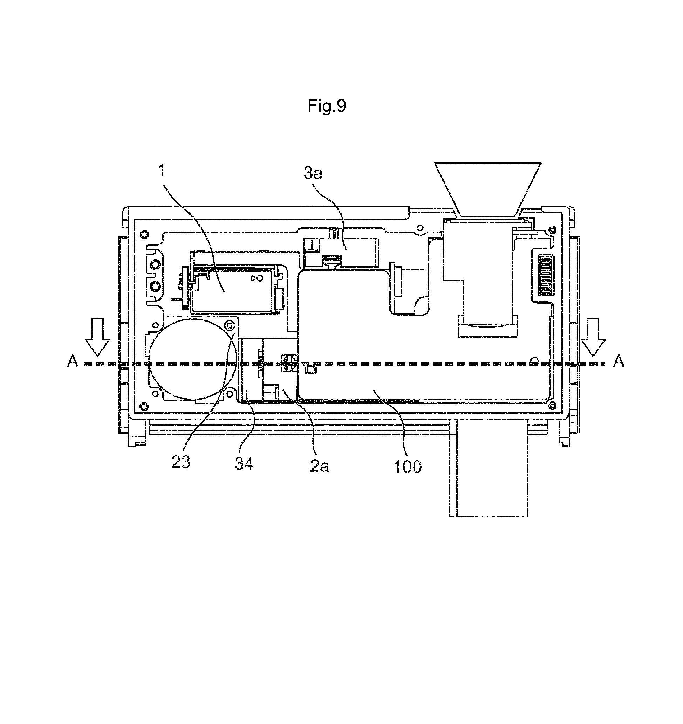

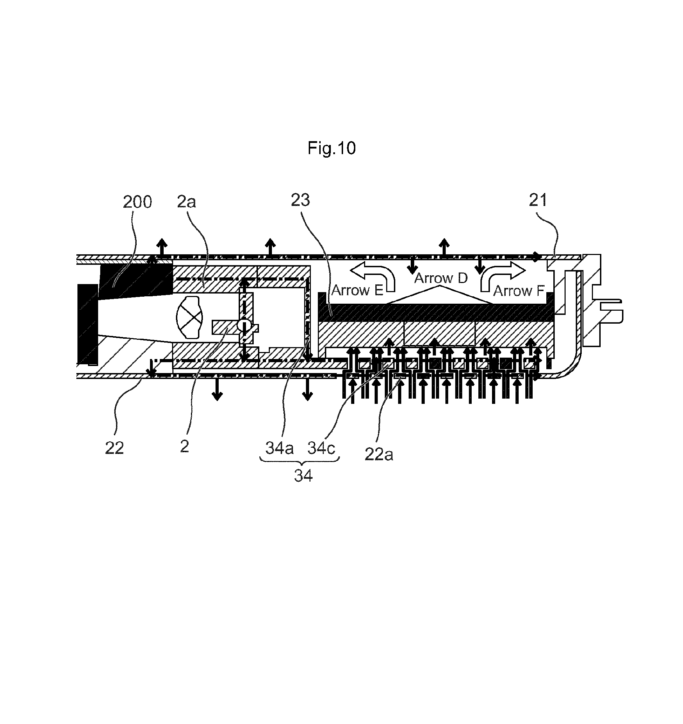

A detailed explanation will be made on a flow of heat dissipation of the red color laser light source apparatus in the image display apparatus 10 with reference to Figs. 9 and 10. Fig. 9 is a top view of the image display apparatus according to the embodiment 2 of the present invention. Fig. 10 is a cross sectional view taken along the line A-A shown in Fig. 9, and illustrating a heat passage and a cooling air passage in the image display apparatus according to the embedment 2 of the present invention.

First, the heat passage inside the image display apparatus will be explained with reference to Fig. 10. Heat generated from the heat generator (semiconductor laser or the like that outputs red color laser light) of the red color laser light source apparatus 2 is first transferred to the red color laser holder 2a. The heat transferred to the red color laser holder 2a is transferred to the fin 34.

The heat dissipation of the red color laser light source apparatus 2 also utilizes the main body case 200. Since the red color laser holder 2a is in contact with the main body case 200, the heat generated from the red color laser light source apparatus 2 is transferred to the main body case 200, and is further transferred to the outside via the image display apparatus main body 100. In the Fig. 10, a dashed-dotted line indicates the main heat passage from the heat generator of the red color laser light source apparatus 2.

Next, the cooling air passage inside the image display apparatus will be explained also with reference to Fig. 10. The cooling fan 23 attached to the tilted portion 30 (see Fig. 8) sucks in outside air through the air inlet ports 22a and takes in cooling air in a direction of an arrow D. The taken-in cooling air is straightly blown onto the bottom portion 34c of the fin 34 connected to the red color laser holder 2a. Then, the cooling air, which has blown onto the bottom portion 34c of the fin 34, passes through the vent holes provided to the bottom portion 34c of the fin 34, and flows out in directions of arrows E and F while hitting the upper surface 21 of the tilted portion 30. The arrows E and F are herein described as representatives as the flow directions of the cooling air. In reality, however, the cooling air flows out in all the directions centering around the arrow D. The fin 34 is provided in the cooling air passage. The heat transferred from the red color laser light source apparatus 2 to the fin 34 is absorbed by the cooling air taken in by the cooling fan 23 through the air inlet ports 22a. The red color laser light source apparatus 2 is cooled by the cooling air via the fin 34 as described above, thereby promoting heat dissipation inside the image display apparatus 10.

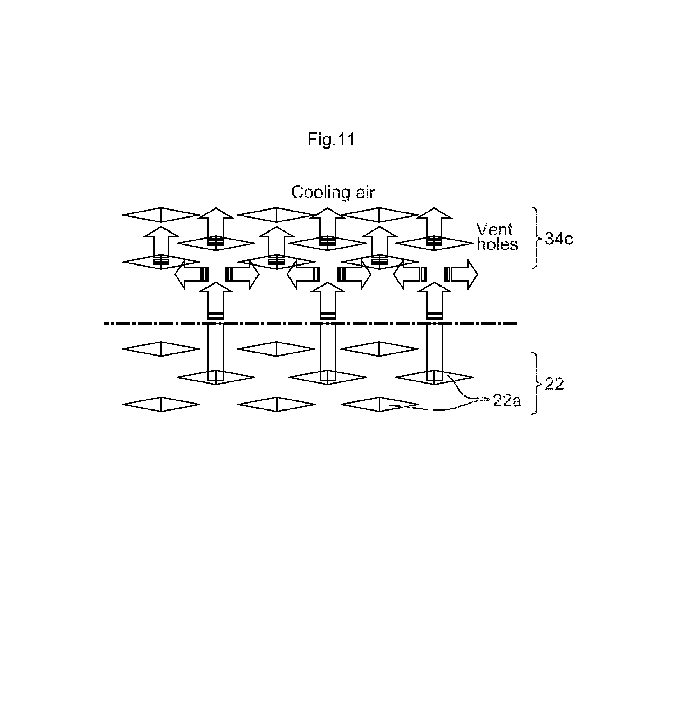

Herein after, a detailed explanation will be made on the vent holes provided to the bottom portion 34c of the fin 34 with reference to Figs. 11, 12, and 13.

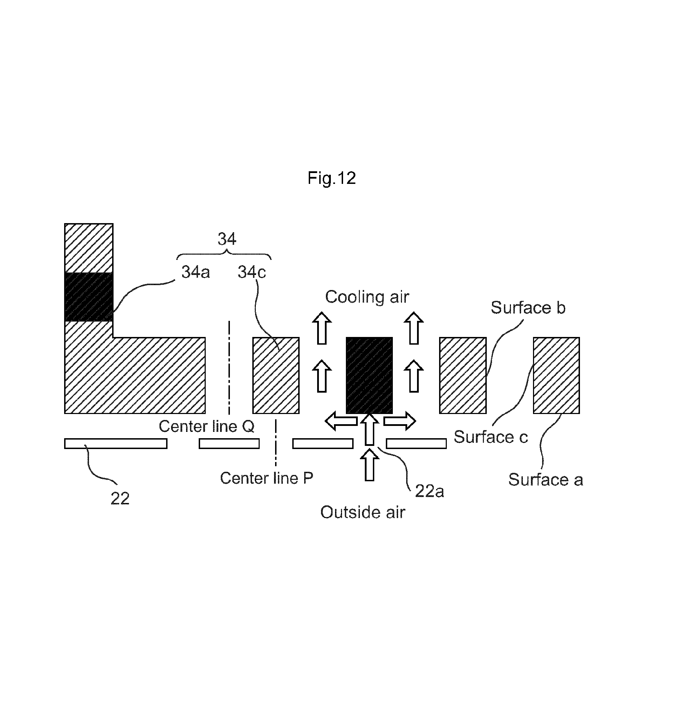

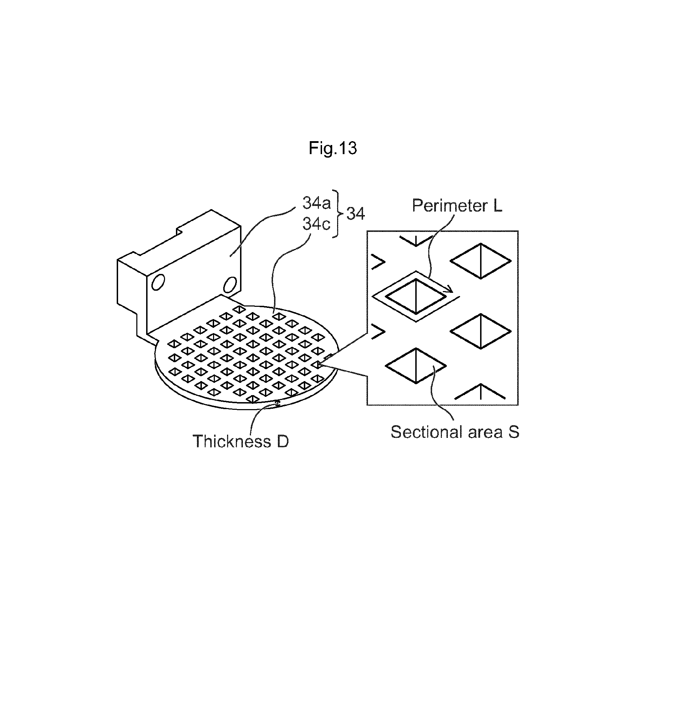

Fig. 11 illustrates a positional relationship between the vent holes of a cooling fin and air inlet ports of an outer case according to the embodiment 2 of the present invention. Fig. 12 is a cross sectional view of the cooling fin and the air inlet ports according to the embodiment 2 of the present invention. Fig. 13 illustrates a perspective view of the cooling fin and an enlarged view of the vent holes according to the embodiment 2 of the present invention.

Notations for surfaces a to c in Fig. 12 are also used to refer to respective cross sections of the vent holes of the cooling fin.

In Fig. 11, cooling air taken in through the air inlet ports 22a on the lower surface 22 of the image display apparatus flows upward after passing through the air inlet ports 22a, and reaches a lower surface (surface a in Fig. 12) of the bottom portion 34c of the fin 34. Then, the cooling air flows in the vent holes provided to the bottom portion 34c of the fin 34 along the lower surface. Thereafter, the cooling air flows upward (to the cooling fan 23 side) in the vent holes of the bottom portion 34c of the fin 34.

Accordingly, after passing through the air inlet ports 22a, the cooling air passes through the vent holes of the bottom portion 34c of the fin 34 while contacting the surface a, and either the surface b or the surface c of the bottom portion 34c, as shown in Fig. 12. By increasing contacting surfaces, such as the surfaces a to c, it is possible to dissipate a larger amount of heat generated from the red color laser light source.

A center line P of the air inlet port 22a and a center line Q of the vent hole of the bottom portion 34c of the fin 34 are mutually offset on the X-Z plane shown in Fig. 8, that is, a bottom surface direction of the lower surface 22. Fig. 12 shows that the center line P of the air inlet port 22a and the center line Q of the vent hole of the bottom portion 34c of the fin 34 are not aligned each other with respect to an axis Z direction. Similarly, the center line P of the air inlet port 22a and the center line Q of the vent hole of the bottom portion 34c of the fin 34 are mutually offset with respect to a direction of an axis X.

As described above, by offsetting the center of the air inlet port 22a and the center of the vent hole of the bottom portion 34c of the fin 34, it is possible to utilize the surface a of the bottom portion 34c of the fin 34 for heat dissipation. A heat dissipation area becomes the largest when the center line of one member is positioned at the middle of a plane of the other member, or vice versa. In addition, a surface of the air inlet port 22a on the fin 34 side is also exposed to the cooling air, thereby increasing a heat dissipation effect. In contrast, when the centers of the two members align, the bottom portion 34c of the fin 34 contributes to the heat dissipation with a smaller amount.

The above is further explained in detail with reference to Fig. 13. In the bottom portion 34c of the fin 34 in Fig. 13, a thickness is denoted as D, a sectional area of the vent hole is denoted as S, and a perimeter of the vent hole is denoted as L. When the vent holes are provided so as to satisfy the relationship, D × L > S, a heat dissipation area of the fin 34 increases. As the heat dissipation area increases, the heat dissipation effect of the red color laser light source apparatus further increases.

Furthermore, by offsetting the center of the air inlet port 22a and the center of the vent hole of the bottom portion 34c of the fin 34, it becomes less likely that dusts or foreign substances directly enter from outside.

The plurality of air inlet ports 22a in a square shape is provided in the embodiment 2. However, the air inlet port 22a of the present invention is not limited to plural and may be singular. Further, the shape of the air inlet port 22a may be circular, oval, or polygonal, and it is not limited to a particular shape. The same is applicable to the vent holes provided to the bottom portion 34c of the fin 34.

In addition, an entire surface of the bottom portion 34c of the fin 34 according to the embodiment 2 is arranged in the air passage of the cooling fan 23 so as to receive a maximum amount of air. However, the arrangement of the bottom portion 34c of the present invention is not limited to this. The bottom portion 34c may be arranged considering the positional relationship between the vent holes of the bottom portion 34c of the fin 34 and the air inlet ports 22a, and a relationship between a heat dissipation effect and a space. In other words, at least a part of the bottom portion 34c of the fin 34 may be positioned in the air passage of the cooling fan 23.

Furthermore, the air inlet ports 22a are provided to the lower surface of the tilted portion 30 in the embodiment 2. Alternatively, the air inlet ports 22a may be provided to the upper surface of the tilted portion 30 to form a cooling air passage that is vertically reversed from that of the embodiment 2 with altered arrangement of the cooling fan and the shape of the fin.

As described above, in the image display apparatus of the embodiment 2, at least a part of the heat dissipator of the red color laser light source, which has the lowest upper limit of the operating temperature, is arranged between the air inlet ports and the air blower so that the cooling air that is taken in through the air inlet ports can directly cool the heat dissipator of the red color laser light source with a short cooling air passage. Since the cooling air can be efficiently utilized for heat dissipation, it is possible to inhibit a temperature increase of the red color laser light source and to decrease fluctuation in the temperature characteristics. Thus, image quality deterioration of the image display apparatus due to a long period of use can be inhibited. In other words, the image display apparatus can inhibit the quality deterioration of projected images, and thus can stably output images of high quality. An apparatus that displays an image using laser light is described in the present embodiment. However, the same effect can be also provided when other light sources, such as an LED light source, are used.

The above-mentioned embodiments show several examples, however the present invention is not limited to these examples. Air is an example of cooling medium, not air but liquid may be applied, as the cooling medium, to the present invention. In the present invention, whether air or liquid, the cooling medium flows in a passage of the image display apparatus from an upper stream to a lower stream, and the cooling medium at the upper stream of the passage is cooler than that at the lower stream of the passage. As long as the heat dissipator of the light source having the lowest upper limit of operating temperature is positioned, at the passage, upstream to any heat dissipator of any other light sources, the above-mentioned embodiments can be changed or modified. That is, if laser light source is applied to the present invention, as long as the heat dissipator of the red color light source is positioned, at the passage, upstream to heat dissipators of the green color and blue color light sources, the above-mentioned embodiments can be changed or modified. To position upstream to any heat dissipator of any other light sources means to position upstream to the other heat dissipator of the other light source or to the other heat dissipators of the other light sources. In other words, to position upstream to any heat dissipator of any other light sources includes meaning of positioning upstream to single heat dissipator or meaning of positioning upstream to plural heat dissipators.

The heat dissipator of the light source having the lowest upper limit of operating temperature may be positioned, away from the air blower, the closest to the air inlet port side in the air passage. Even if the air blower is positioned at the end of air passage, in other words near the exhaust port, it is possible to efficiently cool the heat dissipator of the light source having the lowest upper limit of operating temperature.

An exemplary image display apparatus according to the present invention has a case having an air inlet port and an exhaust port, the case having an air passage that connects the air inlet port and the exhaust port and channels air; an air blower that is in the air passage in the case and channels the air. The image display apparatus according to the present invention also has a plurality of laser light sources housed in the case, each having a heat dissipator that releases heat generated by itself, and each having a light emission wavelength different from one another. At least a part of a heat dissipator of a laser light source having the lowest upper limit of an operating temperature among the plurality of laser light sources is positioned closest to the air inlet port side in the air passage and also directly below the air blower.

Another aspect of above exemplary image display apparatus, wherein the respective plurality of laser light sources are a red color laser light source, a green color laser light source, and a blue color laser light source, the red color laser light source having the lowest upper limit of the operating temperature.

Another aspect of above exemplary image display apparatus further having: a heat conductive sheet. The case and the heat dissipator of the red color laser light source are closely attached to each other with the heat conductive sheet in-between.

Another aspect of above exemplary image display apparatus, wherein the entire heat dissipator of the red color laser light source is positioned directly below the air blower.

Another aspect of above exemplary image display apparatus, wherein the heat dissipator of the red color laser light source is L-shaped.

Another aspect of above exemplary image display apparatus, wherein the air blower is serially arranged between the air inlet port and a bottom portion of the L-shaped heat dissipator of the red color laser light source.

An exemplary image display apparatus according to the present invention has a case having an air inlet port and an exhaust port, the case having an air passage that connects the air inlet port and the exhaust port and channels air. The image display apparatus according to the present invention also has an air blower that is in the air passage in the case and channels the air. The image display apparatus according to the present invention also has a plurality of laser light sources housed in the case, each having a heat dissipator that releases heat generated by itself, and each having a light emission wavelength different from one another. At least a part of a heat dissipator of a laser light source having the lowest upper limit of an operating temperature among the plurality of laser light sources is positioned closest to the air inlet port side in the air passage and also between the air inlet port and the air blower.

Another aspect of above exemplary image display apparatus, wherein a vent hole is provided to the heat dissipator of the laser light source having the lowest upper limit of the operating temperature so as to let through the air.

Another aspect of above exemplary image display apparatus, wherein a center of the air inlet port is not aligned with a center of the vent hole of the heat dissipator of the laser light source having the lowest upper limit of the operating temperature.

Another aspect of above exemplary image display apparatus, wherein a wall having thermal conductivity is provided in order to facilitate a flow of cooling air toward the red color laser light source, the cooling air directly blowing down from the air blower to the heat dissipator of the red color laser light source.

Another aspect of above exemplary image display apparatus, wherein a wall having thermal conductivity is provided in order to facilitate a flow of cooling air toward the laser light source having the lowest upper limit of the operating temperature, the cooling air directly blowing down from the air blower to the heat dissipator of the laser light source having the lowest upper limit of the operating temperature.

Another aspect of above exemplary image display apparatus, wherein the image display apparatus can be ejected or inserted with respect to a personal computer, and projects displayed output of the personal computer to a screen.

Another aspect of above exemplary image display apparatus, wherein the image display apparatus can be ejected or inserted with respect to an electronic device that displays an image.

An exemplary image display apparatus according to the present invention has a case having an air inlet port and an exhaust port, the case having an air passage that connects the air inlet port and the exhaust port and channels air. The image display apparatus according to the present invention also has an air blower that is in the air passage in the case and channels the air. The image display apparatus according to the present invention also has a plurality of light sources housed in the case, each having a heat dissipator that releases heat generated by itself, and each emitting light different from one another. At least a part of the heat dissipator of a light source having the lowest upper limit of an operating temperature among the plurality of light sources is positioned closest to the air inlet port side in the air passage and also directly below the air blower.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. An image display apparatus (10) comprising:
a plurality of light sources (1, 2, 3) each emitting light different from one another and each having an upper limit of operating temperature; and
cooling means (21, 23, 31) providing a passage in which cooling medium flows from an upper stream to a lower stream, the cooling medium at the upper stream of the passage being cooler than that at the lower stream of the passage,
wherein each of the plurality of light sources (1, 2, 3) has a heat dissipator (34, 35) that releases heat generated by the respective of light source (1, 2, 3) to the passage of the cooling means (21, 23, 31), and
wherein at least a part of the heat dissipator (34) of the light source (2) having the lowest upper limit of operating temperature (T2) among the plurality of light sources (1, 2, 3) is positioned, at the passage, upstream to any heat dissipator (35) of any other light sources (1, 3).

2. The image display apparatus according to claim 1, wherein the respective plurality of light sources are a red color laser light source (2), a green color laser light source (1), and a blue color laser light source (3), the red color laser light source (2) having the lowest upper limit of operating temperature (T2).

3. The image display apparatus according to claim 2, wherein the heat dissipator (34) of the red color laser light source (2) is L-shaped.

4. The image display apparatus according to any one claims 1 through 3,
wherein the cooling means includes:
a case (21, 31) having an air inlet port (21 a) and an exhaust port (31 a), the case having an air passage that connects both at the upper stream the air inlet port and at the lower stream the exhaust port and channels air through the air passage; and
an air blower (23) that is in the air passage in the case and channels the air,
wherein the plurality of light sources are housed in the case, and
wherein at least a part of the heat dissipator (34) of the light source (2) having the lowest upper limit of operating temperature (T2) is positioned, among the heat dissipators of the plurality of light sources (1, 2, 3), the closest to the air inlet port side in the air passage or directly below the air blower (23).

5. The image display apparatus according to claim 4, further comprising:
a heat conductive sheet (38), and
wherein the case (23, 31) and the heat dissipator (34) of the red color laser light source (2) are closely attached to each other with the heat conductive sheet (38) in-between.

6. The image display apparatus according to claim 4 or 5, wherein the entire heat dissipator (34) of the red color laser light source (2) is positioned directly below the air blower (23).

7. The image display apparatus according to any one of claims 4 through 6, wherein the air blower (23) is serially arranged between the air inlet port (21a) and a bottom portion of the L-shaped heat dissipator (34) of the red color laser light source (2).

8. The image display apparatus according to any one claims 1 through 3,
wherein the cooling means includes:
a case (21, 31) having an air inlet port (21 a) and an exhaust port (31 a), the case having an air passage that connects both at the upper stream the air inlet port and at the lower stream the exhaust port and channels air through the air passage; and
an air blower (23) that is in the air passage in the case and channels the air,
wherein the plurality of light sources are housed in the case, and
wherein at least a part of the heat dissipator (34) of the light source (2) having the lowest upper limit of operating temperature (T2) is positioned, among the heat dissipators of the plurality of light sources (1, 2, 3), the closest to the air inlet port side in the air passage or between the air inlet port (21 a) and the air blower (23).

9. The image display apparatus according to claim 8, wherein a vent hole is provided to the heat dissipator (34) of the light source (2) having the lowest upper limit of the operating temperature (T2) so as to let air pass through the vent hole.

10. The image display apparatus according to claim 9, wherein a center of the air inlet port (21 a) is not aligned with a center of the vent hole of the heat dissipator (34) of the light source (2) having the lowest upper limit of operating temperature (T2).

11. The image display apparatus according to claim 4, further comprising:
a wall (24) having thermal conductivity is provided in order to facilitate a flow of air toward the light source (2) having the lowest upper limit of operating temperature (T2), the air directly blowing down from the air blower (23) to the heat dissipator (34) of the light source (2) having the lowest upper limit of operating temperature (T2).

12. The image display apparatus according to claim 8, further comprising:
a wall (24) having thermal conductivity is provided in order to facilitate a flow of air toward the light source (2) having the lowest upper limit of the operating temperature (T2), the air directly blowing down from the air blower (23) to the heat dissipator (34) of the light source (2) having the lowest upper limit of the operating temperature (T2).

13. The image display apparatus according to any one of claims 1 through 12, wherein the image display apparatus (10) can be ejected or inserted with respect to an electronic device (300) that displays an image.

14. The image display apparatus according to claim 13, wherein the electronic device is a personal computer (300) and the image display apparatus projects displayed output of the personal computer to a screen.
